# FASCICULE DE BREVET EUROPEEN

(11) **EP 3 844 451 B1**
(45) Date de publication et mention de la délivrance du brevet: **14.09.2022**
(21) Numéro de dépôt: 19779062.9
(22) Date de dépôt: 02.09.2019
(51) Int. Cl.: F28D 20/02, H01M 10/65, B60L 58/24

(54) **STRUCTURE DE GESTION THERMIQUE A CANAUX DE FLUIDE**
STRUKTUR ZUR THERMISCHEN VERWALTUNG MIT FLUIDKANÄLEN
THERMAL MANAGEMENT STRUCTURE HAVING FLUID CHANNELS

(30) Priorité: 31.08.2018 FR 1857878
(43) Date de publication de la demande: 07.07.2021
(73) Titulaire: HUTCHINSON, 75008 Paris (FR)
(72) Inventeur: CHOPARD, Fabrice, 38400 SAINT MARTIN D'HERES (FR); BLANCHARD, Clément, 45200 AMILLY (FR)
(74) Mandataire: Ernest Gutmann - Yves Plasseraud S.A.S.
(86) Numéro de dépôt international: PCT/FR2019/052012
(87) Numéro de publication internationale: WO 2020/044001

(56) Documents cités:
- CN-A- 106 252 787
- FR-A1- 3 039 561
- FR-A1- 3 040 210
- FR-A1- 3 063 137
- FR-A3- 3 015 780

## Description

La présente invention concerne le domaine de la gestion thermique.

Est en particulier concerné un dispositif de gestion thermique (appelé aussi barrière thermique) prévu pour favoriser, dans un volume intérieur que cette barrière entoure ou borde, sur au moins un côté, et/ou vis-à-vis d'un élément producteur temporaire de chaleur qui y est disposé, une gestion de la température.

Sont, de la sorte, en particulier concernés, notamment sur un véhicule, les tuyaux, conduits ou durites, dans lesquels circulent des fluides, tels que de l'air ou de l'huile, ou un fluide frigorigène (comme du R1234 yf) ou encore les installations électriques qui chauffent, telles que les batteries d'accumulateurs électriques, ou encore des parties de moteur dont la température est à gérer :
- situations où il faut favoriser une montée rapide en température, comme lors d'un démarrage à froid,
- situations où il faut favoriser un refroidissement de ladite partie de moteur, comme en fonctionnement ultérieur stabilisé.

Dans le présent texte vont avoir pour sens:
- MCP : un matériau à changement de phase qui change d'état physique (typiquement entre liquide et solide) dans une plage de température restreinte, et absorbe jusqu'à un certain seuil une variation de température en emmagasinant l'énergie reçue; typiquement une hausse de température transmise par une élévation de température d'au moins une cellule,
- isolant thermique : un matériau de conductivité thermique ≤ à 0.5 W/mK, conduisant moins bien la chaleur qu'un MCP lorsqu'il se trouve dans une phase où il est le moins conducteur thermique, et
- thermiquement conducteur : un matériau de conductivité thermique ≥ à 1 W/mK.

En tant que MCP, on pourra trouver :
- un/des MCP « chaud(s) » ayant une température de fusion comprise entre plus de 22°C et 38°C, et de préférence entre plus de 25°C et 37°C. Ce type de MCP peut être utilisé lors des roulages estivaux et notamment lorsque les températures extérieures sont supérieures à 40°C. En fondant, le MCP emmagasine les calories venues de l'extérieur et crée une première barrière thermique ;
- un/des MCP « froid(s) » ayant une température de fusion comprises entre 14°C et moins de 26°C, et de préférence entre 15°C et moins de 25°C. Ce type de MCP peut être utilisé lors des roulages hivernaux, notamment lorsque les températures sont négatives. En cristallisant, les MCP relâchent des calories qui réchauffent le pack batterie ; voire
- un/des MCP utilisé(s), en contact thermique direct avec les cellules, typiquement un MCP ayant une température de fusion précise, typiquement 35°C, car on peut chercher à créer un palier sur une plage de température jugée actuellement haute des cellules, dans le but d'éviter une propagation thermique entre cellules (effet tampon).

Dans une batterie, il peut être très utile de pouvoir réguler la température opérationnelle des cellules qui chauffent quand elles produisent du courant et qui favorablement doivent rester dans une plage de température précises quelles que soient les conditions de températures extérieures même lorsque les cellules sont à l'arrêt.

Dans un tuyau d'air raccordant deux zones chaudes d'un moteur thermique, par exemple, la température dans le volume interne du tuyau peut être à réguler.

Dans un carter moteur, après une phase de démarrage à froid, évacuer, ou plutôt transférer des calories peut être utile.

Dans ce contexte, on conçoit donc qu'il puisse être nécessaire, suivant les situations :
- d'isoler de l'environnement extérieur ou de gérer l'évolution de température d'un volume intérieur et/ou son contenu,
- et/ou de retarder ou au contraire favoriser la propagation d'un flux thermique hors ou vers ce volume.

Faire circuler un fluide dans une structure adaptée à participer à cette gestion thermique peut alors être également nécessaire.

Il existe de telles structures qui présentent pour cela des passages de circulation de fluide, établis entre deux couches de matière, entre une entrée et une sortie pour le fluide, de façon que, vis-à-vis du fluide, soit obtenue une isolation thermique - si les couches sont thermiquement isolantes - ou un échange thermique - par exemple si les couches contiennent un MCP.

On privilégiera a priori alors un matériau, donc un élément, ayant une phase solide dans des températures inférieures à ≤ 20°C.

Ainsi, FR3015780 divulgue l'utilisation de canaux fluidiques disposés dans du MCP et permettant une circulation d'un fluide caloporteur, notamment liquide. Les canaux fluidiques sont formés dans un bloc rigide permettant de les maintenir en place lorsque le matériau à changement de phase MCP passe à l'état liquide.

Il s'agit là d'un ensemble assez complexe à fabriquer. En outre rien n'indique comment obtenir la forme des couches de MCP ni celle du « bloc rigide » permettant de maintenir en place les canaux fluidiques.

Ainsi, parmi les problèmes que l'on a souhaité ici résoudre apparait celui lié à la réalisation performante des structures, ou ensembles, adapté(e)s à participer à une gestion thermique environnante.

A ce sujet, FR3063137 divulgue un ensemble comprenant :
- une batterie de véhicule et,
- un boîtier entourant la batterie comprenant des cellules, et
- pour la gestion thermique de la batterie (échangeur thermique 4), des structures (deux plaques 41,42 assemblées) comprenant individuellement au moins un matériau à changement de phase (MCP) entourant au moins un conduit pouvant convenir à la circulation d'un fluide, lesdits conduits étant raccordés à une entrée et une sortie de fluide.

En contact thermique avec la batterie, sous elle, l'échangeur thermique à corps composite(s) est, dans FR3063137, disposé avec la batterie dans un boîtier dont les caractéristiques ne sont pas spécifiées. Seule une gestion thermique locale (sous la batterie) est prise en compte. Aucune application à plus large échelle n'est envisagée, qui impliquerait l'utilisation conjointe de plusieurs dits éléments de gestion thermique à corps composite et à creux intégrés et donc une mise en œuvre industrielle spécifique.

C'est parce qu'il y a été réfléchi que la présente invention a prospéré.

La présente invention traite en effet :
- de la gestion thermique plus globale des cellules de la batterie,
- de la mise en œuvre industrielle de la solution générique proposée,

Une solution proposée ici consiste ainsi dans un dit ensemble comme ci-avant, mais qui se caractérise en outre en ce que :
- lesdites structures définissent ou doublent des parois latérales du boîtier, sur des premiers côtés des cellules, et
- l'ensemble comprend en outre :
   -- une plaque de refroidissement à travers laquelle peut circuler un (premier) fluide d'échange thermique adapté à échanger thermiquement avec les cellules, la plaque de refroidissement étant disposée, pour un échange thermique avec les cellules, sur (donc face à) des deuxièmes côtés de celles-ci différents desdits premiers côtés, et/ou
   -- un ou plusieurs éléments d'échange thermique à travers le(s)quel(s) peut circuler un (second) fluide d'échange thermique adapté à échanger thermiquement avec les cellules, le(s) élément(s) d'échange thermique étant interposé(s) entre lesdits premiers côtés des cellules et lesdites structures.

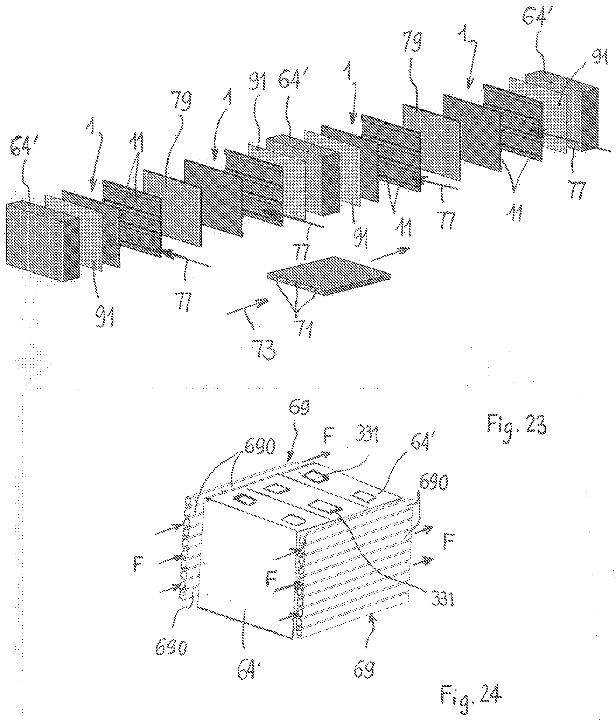

Le terme « plaque de refroidissement » est à comprendre comme définissant un moyen d'échange thermique à travers lequel ledit (premier) fluide d'échange thermique va pouvoir échanger thermiquement avec les cellules situées en contact avec cette plaque de refroidissement. Structurellement, une telle « plaque de refroidissement » peut se présenter notamment sous la forme d'(au moins) une poche souple, d'un panneau rigide, d'une série de tubes parallèles (comme figure 24) ou croisés, chacun (poche(s), panneau ou tubes) contenant un volume adapté à la circulation dudit (premier) fluide d'échange thermique. Ainsi, les termes « plaque de refroidissement » et « éléments d'échange thermique » sont synonymes.

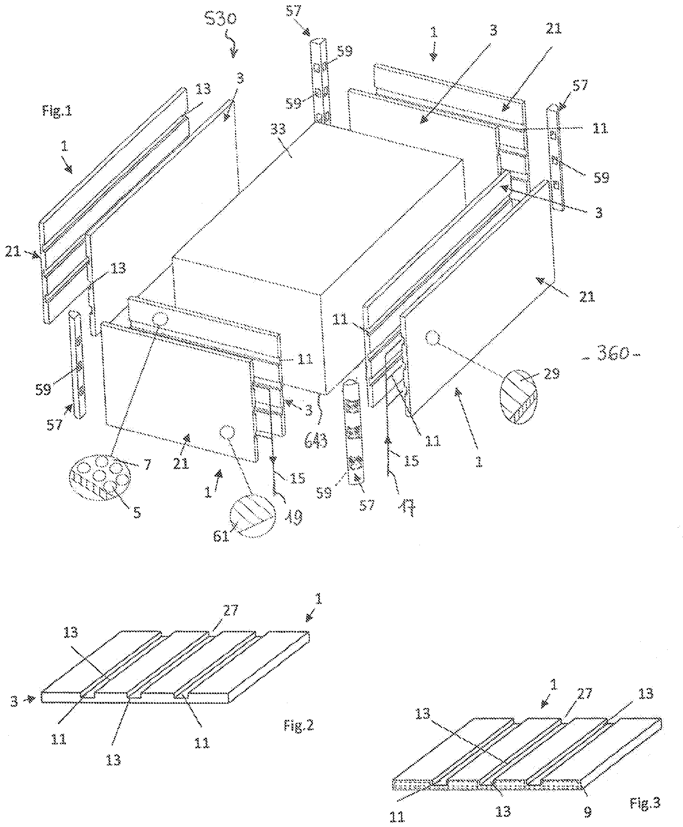

Les expressions « premiers côtés » et « deuxièmes côtés » des cellules sont à considérer comme suit : les cellules sont identiquement orientées, parallèles entre elles, disposées en ligne. Il s'agit donc dans chaque cas d'un côté commun à tout un groupe de cellules empilées (même si la pile est à plat) ; voir figures 1,18,21-25.

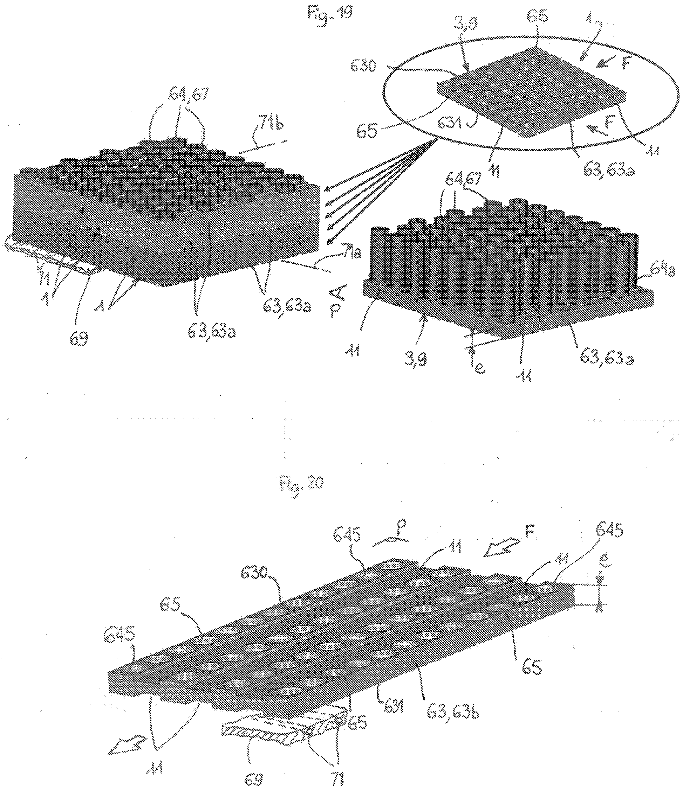

Le cas des cellules prismatiques sera un cas général ; c'est celui des exemples ci-après (sauf solution des figures 19-20).

Les premier et second fluides d'échange thermique peuvent être identiques ou différentes ; de même en ce qui concerne le fluide circulant dans le(s) conduit(s) desdites structures à MCP. On peut donc imaginer un seul et même fluide circulant en série ou en parallèle dans les éléments précités.

Quoi qu'il en soit, c'est plutôt autrement que sous la forme d'une plaque disposée sous la batterie, le tout dans un boîtier « neutre », que l'invention propose d'aborder la question précitée de la gestion thermique des cellules de la batterie. En effet, c'est aussi avec l'environnement extérieur qu'il été décidé de composer. C'est ainsi qu'il a été décidé de fonctionnaliser le boîtier, et pas l'intérieur de celui-ci comme dans FR3063137, et de combiner ceci avec des échanges thermiques sans MCP via le (second) fluide d'échange thermique. On pourra ainsi dissocier:
- les fonctions retardant ou favorisant la propagation d'un flux thermique hors du boîtier ou vers l'intérieur de celui-ci, via le MCP,
- de celles assurant d'abord l'échange thermique avec les cellules, sans lissage thermique via du MCP.

On aura dépassé la réticence à appliquer au boîtier (qui définit l'encombrement extérieur de la « zone batterie ») une approche typiquement considérée comme devant être confinée à l'intérieur du boîtier.

En outre, la manière de gérer thermiquement la batterie, sur une ou plusieurs faces d'un groupe complet de cellules, et de créer autour une barrière thermique (avec MCP et isolant thermique) est en rupture par rapport à la manière conventionnelle connue, tout en apportant un avantage notable en termes de performance/poids/encombrement.

Par ailleurs, l'invention propose de réaliser les conduits traversant le MCP pour y circuler du fluide :
- soit via des plaques, tubes ou équivalents, rapportés,
- soit par des creux intégrés.

C'est ainsi qu'il est proposé que le matériau à changement de phase (MCP) soit présent dans une matrice rigide structurante, de sorte qu'est alors formé un corps composite autoportant quelle que soit la phase du matériau à changement de phase contenu, le corps composite étant conformé pour localement présenter extérieurement au moins un creux qui définit par lui-même une paroi de canal correspondant audit au moins un conduit pouvant convenir à la circulation d'un fluide.

Par rapport à l'enseignement de FR3063137, on aura alors amplifié l'avantage de l'obtention d'éléments assez fins et légers, en l'appliquant à une barrière thermique.
A ce sujet, pour élargir les conditions d'utilisation du fluide concerné, il est aussi proposé que soient prévus des blocs fonctionnels interposés chacun entre deux dites structures successives, qui les réuniront et qui seront traversés, pour la circulation du fluide, par des passages de communication entre lesdits conduits des structures successives.

Si lesdits blocs sont des blocs d'angles disposés aux coins du boîtier, la circulation du fluide pourra utilement s'opérer sur plusieurs faces adjacentes, voire sur tout le tour (a priori donc sur quatre faces) de la batterie (c.a.d. des cellules considérées toutes ensemble).

Une approche modulaire pour la mise en œuvre industrielle de la solution a en outre été considérée comme ayant alors un sens.

Aux mêmes fins, il est aussi proposé que les structure comprennent individuellement un couvercle comprenant :
- au moins un autre (ou second) corps composite, autoportant quelle que soit la phase du matériau à changement de phase contenu, et/ou
- une poche plastique ou métallique, étanche au gaz et sous vide interne partiel, dont la forme est maintenue par ledit vide interne,
le couvercle étant fixé avec le (premier) corps composite de façon étanche vis-à-vis de la circulation du fluide.

Il est aussi proposé que ce couvercle soit conformé pour localement présenter lui-même au moins un creux allongé:
- qui définira par lui-même une autre paroi de canal convenant à la circulation du fluide, et
- qui complètera et fermera latéralement ladite paroi de canal du (premier) corps composite initialement cité, à une interface de contact.

La question de la liaison (premier) corps composite/couvercle pouvant être critique, il est proposé que chaque corps composite ou poche présente latéralement des rebords pour un appui du couvercle, lequel pourra alors être soudé avec le (premier) corps composite, à l'endroit desdits rebords.

Ainsi, on évitera a priori de souder sur les tranches des pièces, ceci facilitant et sécurisant les liaisons corps composite/couvercle.

Concernant la soudure :
- pour les liaisons corps composite/couvercle, on pourra recourir au brasage, sous réserve que chaque liaison créée soit étanche vis-à-vis du fluide devant circuler ;
- on préfèrera par contre que, pour la réalisation d'une dite poche en elle-même, les feuilles, films ou plaques à réunir à cette fin soient soudés entre eux par un soudage excluant a priori tout brasage, conformément au sens reconnu dans la technique. Dans ce soudage, il n'y aura alors pas de matériau d'apport et/ou pas de fusion des bords assemblés. Dans le texte ci-après, les scellements sous vide des poches seront a priori de tels soudages continus et non de type points par points ; « spot welding » en anglais.

Dans ce qui précède, on aura noté que, dans un cas, la « paroi de canal » définie par chaque dit creux « pourrait convenir » à la circulation d'un fluide. Ainsi, ce n'est qu'une possibilité. On pourra en effet préférer interposer un fourreau de circulation dudit fluide qui :
- présentera une entrée et une sortie pour le fluide, respectivement raccordées à l'entrée et à la sortie de fluide des canaux,
- intègrera plusieurs dépressions allongées calées dans plusieurs dits creux au moins un creux,
- sera fixé entre le couvercle et le (premier) corps composite, et qui,
- transversalement à une direction générale d'allongement des dépressions :
   -- occupera une section fermée comprise entre 30 et 100% de la section cumulée desdits:
   --- couvercle et
   --- corps composite, et,
   -- avec desdites dépressions occupant une section minoritaire, de préférence entre 5 et 20% de la section totale du fourreau.

Même si respectivement la tenue intrinsèque du corps composite et le vide interne vide partiel participent à la tenue de la forme de la structure précitée, la forme spécifique retenue devrait avoir son importance dans l'atteinte à la fois d'une rigidité intrinsèque certaine et la définition des canaux à fluide.

C'est à cette fin qu'il est proposé que chaque corps composite autoportant ou dite poche présente:
- une forme courbée, avec des angles ; et/ou,
- une forme crénelée dont certains au moins des créneaux définissent desdits creux.

Dans la présente solution, par rapport à FR3015780, il n'y a ni canaux fluidiques disposés dans du MCP : les canaux sont séparés du MCP par le matériau du corps composite, voire du couvercle. De fait, il n'y a plus ni nécessité d'éléments structurels rapportés pour définir les canaux fluidiques en eux-mêmes, au sein d'un élément structurel intermédiaire rigide également rapporté (dont on peut aussi se dispenser) ni risque d'altération de tenue mécanique de la structure, qui est autoportante ne serait-ce que du fait desdits creux.

A noter que ce qui précède s'applique de la même manière si, dans les poches, on place un matériau isolant thermique, ceci pouvant même renforcer la tenue intrinsèque des poches sous vide.

A toute fin, il est à cette étape :
- confirmé qu'un matériau à changement de phase - ou MCP - désigne ici tout matériau capable de changer d'état physique, entre par exemple solide et liquide ou solide et gazeux, dans une plage de température restreinte comprise entre -50°C et 50°C, voire entre -60°C et 150°C, compte tenu des applications privilégiés qui peuvent se présenter dans le domaine des véhicules ou engins (terrestres, aériens, maritimes ou fluviaux). Le transfert de chaleur (ou transfert thermique) peut s'opérer par utilisation de sa Chaleur Latente (CL) : le matériau peut stocker ou céder de l'énergie par simple changement d'état, tout en conservant une température sensiblement constante, celle du changement d'état,
- précisé que le(s) matériau(x) thermiquement isolant(s) pourra(ont) être un isolant « simple » comme de la laine de verre, mais on préfèrera certainement une mousse, par exemple de polyuréthane, ou encore plus favorablement un matériau thermiquement isolant poreux.

En liaison avec l'utilisation d'une matrice rigide structurante, il a été cherché à définir des solutions qui satisfassent à la problématique suivante posée : réalisation industrielle en grande série, masse réduite, découpe aisée et précise pour mise en forme à souhait, faible coût, performance thermique (conductivité thermique adaptée, notamment dans un environnement « batterie »), maintien du matériau à changement de phase (MCP) dans la matrice lors du changement de phase du matériau, possible utilisation dans un système d'échangeur à fluide(s), avec capacité pour le MCP de n'être pas en contact avec le(s) fluide(s), afin d'éviter les dispersions quand il est en phase liquide (ou gazeuse dans l'hypothèse où il serait ainsi dans l'une de ses phases). Le contact (l'interface) avec le(s) fluide(s) sera alors assuré par la matrice rigide structurante,

Prenant en compte cette problématique, il est d'abord proposé que la structure composite comprenne un élastomère ou des fibres, ceci donc outre au moins un MCP (et a priori plutôt un matériau à plusieurs MCP changeant de phases à des températures différentes). Avec un élastomère, on bénéficiera d'une capacité élevée de déformation, alors que les fibres seront utilisées pour leur plus faible densité et leur capacité importante d'imprégnation de MCP.

Dans l'option structure composite comprenant (au moins) un élastomère, il est proposé que l'élastomère soit choisi parmi les composés suivants : NR, IR, NBR, XNBR, HNBR, ECO, EPDM, EPM, CM, CSM, ACSM, CR, ACM, EVA, EAM, les copolymères éthylène-acide acrylique, les caoutchouc butyles, butyles halogènes et isobutylène-p-méthylstyrène para-bromo- méthylstyrène, avec addition d'au moins un des agents modifiants suivants : polybutadiène-vinyle-1,2 greffé à l'anhydride maléique à l'acide carboxylique ou les polybutadiènes époxydés et/ou hydroxylés, des silanes, des copolymères éthylène- acide acrylique, des copolymères éthylène-propylène greffés à l'anhydride maléique.

Dans ce cas, il sera a priori préféré que :
- la compacité soit comprise entre 60 et 100%.
- la conductivité du corps composite soit comprise entre 0.5 et 3 W/m.K-1, de préférence entre 1 et 2 W/m.K-1, et
- la concentration en masse dans le corps composite du matériau à changement de phase soit comprise entre 40% et 70%, et de préférence entre 50% et 60%.

Dans l'option structure composite comprenant des fibres, il est proposé, pour une prise en compte toujours plus performante de la problématique précitée, que soit utilisé (au moins) un feutre de graphite.

Revenant sur la question de la gestion thermique globale de la batterie avec un boîtier fonctionnalisé, il est aussi proposé :
- de placer lesdites structures à corps composite (MCP) en échange thermique avec les cellules, sur des premiers côtés desdites cellules, et
- de déplacer la plaque de refroidissement de FR3063137 (échangeur thermique 4) disposée aussi en échange thermique avec les cellules le long de deuxièmes côtés de ces cellules, la plaque de refroidissement présentant donc des conduits, lesquels sont reliés à une deuxième alimentation en un fluide à y faire circuler.

A noter:
- que lesdits premiers côtés pourront utilement comprendre (au moins) deux premiers côtés opposés d'un groupe (ou ensemble) de cellules alignées côté-à-côte, et parallèlement auxquels (côtés) s'étendront respectivement une première et une seconde dites structures, chacune en forme générale de plaque, et
- que la plaque de refroidissement formera alors une troisième dite structure parallèlement à laquelle s'étendront lesdits deuxièmes côtés du groupe de cellules, ces deuxièmes côtés étant différents desdits (au moins) deux premiers côtés opposés de ce groupe de cellules.

Ainsi, c'est sur au moins trois côtés différents que le groupe de cellules considéré sera en échange thermique avec du MCP, voire aussi avec le fluide à y faire circuler.

A noter qu'aussi, utilement, le boîtier pourra définir une barrière thermique:
- qui bordera sur plusieurs côtés un volume intérieur dans lequel lesdites cellules de la batterie seront disposées, et
- dont lesdites structures qui en définiront ou en doubleront les parois latérales retarderont ou favoriseront une propagation d'un flux thermique hors ou vers le volume.

En effet, l'approche suivie de fonctionnalisation du boîtier qui est à l'interface entre les cellules (internes) et l'environnement extérieur permet de destiner l'ensemble précité à former non pas, ou pas seulement, un échangeur thermique, comme dans FR3063137, mais une barrière thermique, autour d'un ou plusieurs groupes de cellules, donc entre ce(s) groupe(s) et l'environnement extérieur dans lequel va évoluer le véhicule équipé de la solution de l'invention.

A cette fin, on pourra utilement prévoir des parois d'isolant thermique doublant extérieurement lesdites structures.

Elles les doubleront en particulier en étant rapportées contre elles extérieurement, ou les définissant extérieurement.

Ainsi, le MCP (ou de préférence les différentes compositions combinées de MCP changeant de phases à différentes températures) sera en particulier présent pour lisser les excès de chaleur ou de froid venant de l'environnement extérieur, après que lesdites parois d'isolant(s) thermique(s) auront été traversées par le flux thermique dirigé de l'extérieur (l'environnement) vers l'intérieur (ledit volume où sont disposées les cellules).

L'invention sera si nécessaire mieux comprise et d'autres détails, caractéristiques et avantages de l'invention pourront apparaître à la lecture de la description suivante faite à titre d'exemple non limitatif en référence aux dessins annexés.

Dans ces dessins :
- la figure 1 schématise (en vue éclatée) des structures entre et autour d'une cellule de batterie, pour en assurer une gestion thermique périphérique ;
- les figures 2-5, 8, 10 et 12 schématisent différents exemples de telles structures conformes à celles de l'invention;
- les figures 6,7 schématisent deux agrandissements locaux de la réalisation de la figure 5 ; et
- les figures 9, 11 schématisent deux agrandissements locaux des réalisations des figures 8 et 10, respectivement étant remarqué que les figures 4 à 11 montrent des structures opérationnelles, à éléments réunis, tandis que les figures 1, 13 à 17 sont des vues éclatées ;
- la figure 12 schématise un corps composite ou dite poche, de forme courbée ; ici à section sensiblement en U ou C ;
- les figures 13,14 schématisent deux solutions respectivement avec joints et tubes additionnels à circulation de liquide, ces deux aspects pouvant être dissociés ;
- les figures 15,16 schématisent deux solutions avec fourreau intermédiaire de circulation de fluide ;
- la figure 17 schématise une solution à plaque intermédiaire de fermeture latérale de canaux de circulation de fluide ;
- la figure 18 schématise un boîtier à deux panneaux latéraux selon l'invention intégrant des canaux de circulation de fluide,
- les figures 19 (en trois parties: haute, droite et gauche) et 20 schématisent une solution à plateau empilés, passages pour des cellules et canaux d'air,
- les figures 21,22 schématisent respectivement réuni et en éclaté un assemblage de gestion thermique de cellules prismatiques de batterie à double flux de fluides, respectivement en surface et à cœur,
- la figure 23 schématise la solution montrée figure 22, avec des feuilles d'isolation électrique additionnelles ,
- la figure 24 schématise deux « plaques de refroidissement » 69 se présentant comme des tubes, ou tuyaux, 690, parallèles entre eux et où circule un fluide F,
- la figure 25 schématise une partie d'un boîtier pour cellules (ou accumulateurs) électriques de batterie qui peut être réalisé comme figure 1 mais avec en outre des éléments d'échange thermique (340 ci-après) interposés latéralement entre les cellules et les structures (1 ci-après) de gestion thermique de la batterie et des blocs intercalaires (570 ci-après),
- et les figures 26,27 schématisent deux variantes de réalisation de conduits à fluide dans un moyen de gestion thermique contenant du MCP.

### DESCRIPTION DETAILLEE

Un but de la solution ici proposée est donc la réalisation performante de structures à inertie thermique (liée à la présence de MCP) et/ou isolation thermique (liée à la présence d'isolant thermique de type PIV) mis en place à fins de gestion thermique environnante, notamment d'une batterie d'accumulateurs.

De fait, la structure 1 proposée à cette fin comprend, comme illustré :
- un corps composite 3 contenant au moins un matériau 5 à changement de phase (MCP) dispersé dans une matrice 7 rigide structurante, de sorte que le corps composite est autoportant quelle que soit la phase du matériau à changement de phase contenu, et/ou
- une poche 9, plastique ou métallique, thermiquement conductrice, étanche au gaz et sous vide interne partiel, donc de type PIV, ayant une forme maintenue par le vide interne. Chaque poche 9 (ou 90 ci-après) pourra envelopper (donc contenir) du MCP 5.

Le corps composite 3 et/ou la poche 9 sont conformés pour localement présenter extérieurement au moins un dit creux 11 qui définit par lui-même une paroi 13 de canal pouvant convenir, voire qui est prévu, à la circulation d'un fluide 15, étant alors supposé que le canal créé est alors raccordé à une alimentation 17 et une récupération 19 de ce fluide, lequel peut être liquide ou gazeux, voir :

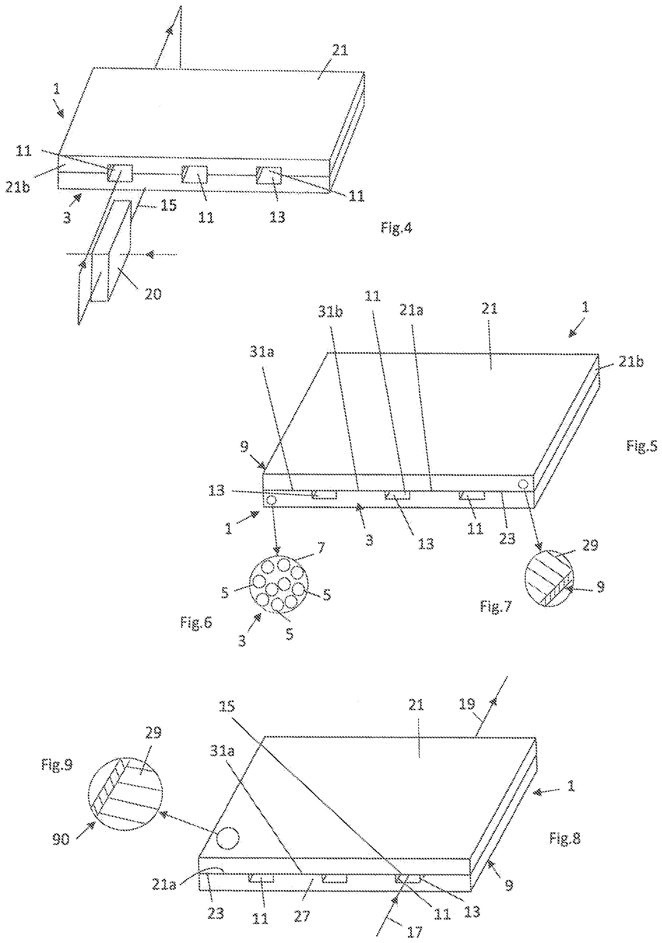

- figure 4 pour un exemple de circulation du fluide 15 en circuit fermé, avec passage dans un échangeur 20 où le fluide 15 pourrait soit se charger en/soit décharger des calories, ou des frigories,
- et figure 8, pour un exemple de circulation du fluide 15 en circuit ouvert.

Le fluide 15 peut être caloporteur ou frigorigène. Ce peut être un liquide.

Si, comme illustré figures 2-3, la structure 1 ayant les caractéristiques précitées se limite à un corps composite 3 ou une poche 9, la paroi 13 du canal (le creux 11) pourra être fermée latéralement, et donc la structure complétée par au moins un couvercle 21:
- qui localement complètera (lui-même) la paroi 13, via une partie de sa surface 21a placée contre le corps composite 3 ou la poche 9,
- et qui sera fixé à ce corps composite ou à la poche de façon étanche vis-à-vis de la circulation du fluide.

Sur les figures, les éléments repérés comme un corps composite 3 ou une poche 9 ou un couvercle 21 peuvent être intervertis.

Ainsi, dans un ensemble ou une structure 1 pourvu d'un couvercle 21, au moins un des éléments pourra se présenter comme par exemple une plaque, sans dit creux, comme schématisé figures 5,8,10.

Pour la liaison avec ce couvercle, il est proposé que chaque corps composite 3 ou poche 9 présente latéralement des rebords 23 pour un appui du couvercle 21. Le couvercle 21 pourra alors être soudé avec le corps composite ou la poche, à l'endroit des rebords 23. Ainsi, on évitera a priori de souder sur les tranches des pièces, comme la tranche 21b du couvercle 21 figure 4,5.

De ce qui précède, on aura compris que toute forme faisant office de couvercle pour le de canal du fluide 15 conviendra.

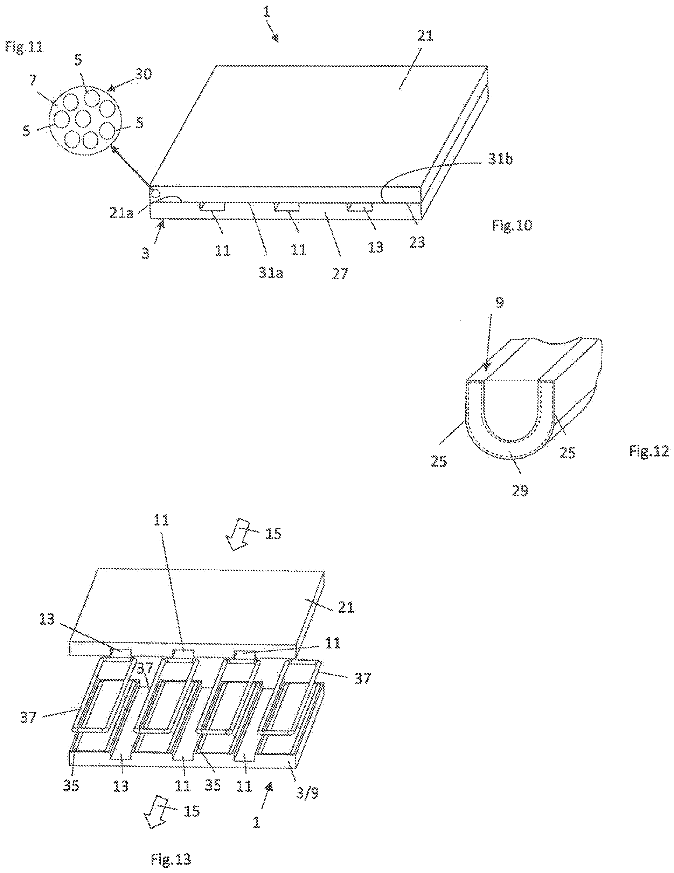

Toutefois, concernant la réalisation des couvercles, on pourra préférer, comme illustré figures 9,11, que chaque couvercle 21 comprenne au moins:
- un autre corps composite 30 autoportant quelle que soit la phase du matériau MCP contenu, et/ou
- une autre poche 90, PIV, plastique ou métallique, étanche donc au gaz et sous vide interne partiel, dont la forme sera maintenue par le vide interne.

Comme précédemment, cet autre corps composite 30 et/ou autre poche 90 sera alors conformé(es) pour localement compléter et fermer latéralement la paroi 13 du canal précité, donc chaque creux 11.

Comme déjà mentionné, il s'agira là d'une réponse intéressante aux difficultés actuelles à réaliser industriellement en grande série une structure permettant à la fois une circulation de fluide et un conditionnement soit d'un vide, soit de MCP.

Pour favoriser l'atteinte à la fois d'une rigidité intrinsèque certaine et la définition des canaux à fluide souhaités, il est par ailleurs proposé que chaque corps composite 3,30 ou dite poche 9,90 présente, comme illustré :
- une forme courbée, avec des angles 25 qui peuvent être arrondis (voir figure 12); et/ou,
- une forme crénelée dont certains au moins des créneaux 27 définissent plusieurs dits creux 11 (voir figures 3,10 par exemple).

On tirera en outre bien parti de ces créneaux et angles en prévoyant par ailleurs que, pour fermer latéralement chaque canal (donc chaque creux 11), le couvercle 21 et le corps composite autoportant 3 ou la poche 9 :
- présentent entre eux des soudures étanches, à l'endroit de tronçons respectifs, tels 31a,31b, de parois bordant les canaux,
- et soient en appui deux à deux, y compris à l'endroit desdits tronçons respectifs de parois, tels 31a,31b, intercalés donc entre deux canaux consécutifs, ou situés de part et d'autre des canaux latéralement extérieurs.

Dans les poches 9 ou 90, on pourra utilement avoir placé un matériau dit thermiquement isolant (voir ci-avant) 29, ceci pouvant même renforcer la tenue intrinsèque des poches sous vide.

Concernant le choix dans la réalisation des corps composites 3,30, il pourra être suivi les recommandations suivantes, en particulier pour répondre à un besoin de maintien en température de cellules ou boîtiers d'une batterie 33 de véhicule électriques ou hybrides ; cf. figure 1 où chaque structure 1 comprend dans l'exemple deux parties 3,21 intégrant chacune directement une série de canaux (creux 11 à parois 13), ici parallèles, de circulation de fluide 15, lequel arrive et repart via un circuit externe.

En effet, notamment les cellules lithium-ion sont fortement impactées par le paramètre température. Une mauvaise prise en compte de celle-ci peut avoir de lourdes conséquences sur la durée de vie des cellules de la batterie, sur leurs performances (capacité et puissance délivrée), leur stabilité et ainsi que sur la sécurité d'utilisation.

D'abord, même si le changement d'état liquide-gaz et inverse des MCP est intéressant en termes de quantité d'énergie mise en jeu, le changement d'état privilégié dans les applications visées pourra être solide-liquide et inverse.

Ensuite, pour demeurer sur l'exemple des cellules lithium-ion, la plage de température dans laquelle elles doivent être maintenues pour fonctionner de manière optimale est comprise entre 25 et 35°C.

Or, outre les matériaux utilisés pour les éléments participant à la gestion thermique et la disposition de ceux-ci en couches pouvant combiner MCP et isolants thermiques (voir par exemple WO2017153691), prévoir une circulation de fluide au sein de cette architecture, typiquement entre deux couches de matériaux, peut s'avérer nécessaire ; voir canaux 55 dans ce document.

Pouvoir faire circuler un fluide 15, avec des canaux branchés par exemple sur un circuit d'air extérieur, entre les entrée/alimentation17 et sortie/récupération 19, sera alors requis, dans une structure telle que celle 1 ici présentée.

Outre réaliser ceci avec la solution qui précède, on a aussi souhaité définir une constitution de corps composite 3 performante, comme évoqué ci-avant, dès lors que c'est la nature même de ce corps qui assurera les critères de performance thermique, d'autoportance et de facilité de mise en forme ou de découpe attendus.

Aussi est-il proposé deux solutions, respectivement à base élastomère ou fibres, chacune avec donc en outre a priori plusieurs MCP changeant de phases à des températures différentes.

A noter que les matériaux à changement de phase utilisés dans le seront alors favorablement formulés afin de les inclurent dans des matrices avec une quantité massique de MCP dans la formulation typiquement comprise entre 30 et 95%.

Les formulations utiliseront de préférence des matériaux micro-encapsulé ou purs dont les transitions de phase pourront être comprises, pour les applications batterie, entre -10 et 110°C (en fonction en particulier des électrochimies, lithium-ion ou non).

Dans le cas de l'application Lithium-ion, on pourra prévoir des MCP micro-encapsulés avec un pourcentage massique sur produit formulé de 35 à 45 %. Ces MCP seront favorablement inclus dans une matrice en silicone contenant notamment des charges ignifugeantes et conductrices thermiques.

Dans la première des deux solutions précitées, la matrice 7 comprend (au moins) un élastomère, ceci permettant d'adapter le corps 3 à des situations pouvant nécessiter une mise sous tension mécanique ou le suivi de formes complexes (aspect élastique de l'élastomère), avec des masses peu importantes.

Dans la seconde solution, la matrice 7 comprend des fibres.

Pour une prise en compte toujours plus performante de la problématique précitée, il est proposé que soit utilisé (au moins) un feutre de graphite, avec donc des fibres de graphite.

En termes de mise en œuvre, on pourra en particulier prévoir que plusieurs structures 1 soient installés entre deux cellules adjacentes et/ou sur différentes faces et en périphérie du compartiment de la batterie pour l'envelopper.

On pourra ainsi prévoir, en partant de la surface du compartiment de batterie, quatre couches de matériau à changement de phase (plusieurs MCP) entre lesquelles auront été installées des circulations du fluide 15 (air par exemple). Sur la face extérieure des éléments MCP aura été installé l'isolant sous vide, soit typiquement une ou plusieurs poches 9 ou 90. Une enveloppe périphérique thermiquement conductrice pourra permettre la tenue mécanique et la protection du système dans son ensemble.

A noter que les deux solutions ci-avant permettent d'assurer que du MCP ne soit pas en contact direct avec le fluide et qu'il n'y ait pas de fuite de MCP à l'état fluide.

De façon générale une solution à corps composite comme ci-avant va pouvoir travailler dynamiquement : sur un véhicule électrique ou hybride, typiquement à un moment de forte demande, comme par exemple lors d'un démarrage sous entrainement électrique en hiver (température extérieure de 3/4°C par exemple) on va en effet pouvoir faire circuler de l'air (venant de l'extérieur) au travers des creux 11 qui vont donc permettre à cet air de réchauffer le MCP, en ayant au passage récupéré de l'énergie thermique sur les cellules de la batterie, l'air pouvant ensuite être redirigé vers l'environnement extérieur. Lors de son parcours, l'air aura donc à la fois réchauffé le(s) MCP et évacué un excès de chaleur des cellules de la batterie. Autre hypothèse : en hiver, lors du fonctionnement des cellules, de l'air refroidi par un circuit de climatisation est projeté vers ces cellules. Cet air soufflé passe ensuite au travers des canaux 11.

Concernant maintenant la fabrication des corps composite 3,30, on notera qu'ils pourront se présenter comme des plaques comprenant du graphite fibreux compressé, en tant que matrice 7 structurante, dans laquelle sera imprégné du MCP qui pourra être, ou comprendre, de la paraffine.

Les feutres de graphite pourront être obtenus par exfoliation. S'il y a une enveloppe, elle sera thermiquement conductrice (feuille plastique par exemple). La matrice imprégnée ne relarguera pas de MCP si elle n'est pas contrainte. Et pour obtenir un corps composite à paroi de canal intégré, on pourra simplement mouler ou usiner le corps composite brut. La solution à poche sous vide pourra s'obtenir par pliage.

Figure 13, une solution propose que la structure 1, qui comprend le corps composite 3 et un couvercle 21 comprenant lui-même au moins un autre dit corps 30 composite, comprend en outre des gorges 35 dans le corps composite 3 et/ou dans le couvercle 21. Les gorges 35 reçoivent des joints 37 pour une étanchéité au fluide entre lesdits corps, en bordure des creux 11. Dans l'exemple, le fluide 15 est en contact direct avec les parois 13 de canaux.

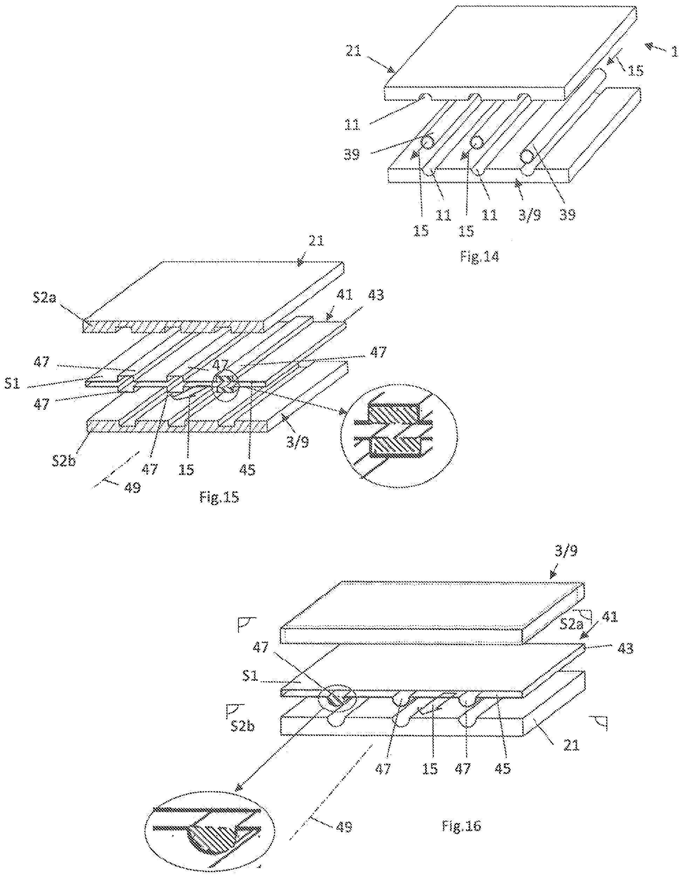

La solution alternative de la figure 14 propose que la structure 1 comprenne des tubes 39 de circulation d'un liquide, en tant que fluide 15. Les tubes 39 sont individuellement reçus dans les creux 11 qui se font face. Ils sont en un matériau favorisant les échanges thermiques avec l'intérieur des éléments 3,9,21 pour que ceci s'opère au passage du fluide.

La solution alternative des figures 15,16 propose que la structure 1 comprenne un fourreau 41 de circulation dudit fluide 15. Le fourreau 41 présente une entrée 43 et une sortie 45 pour le fluide. Il intègre plusieurs dépressions 47 allongées saillantes vers l'extérieur. Ces dépressions 47 sont reçues (calées) dans les creux 11 qui se font face. Le fourreau 41 est fixé directement ou non (par exemple par collage entre eux des panneaux 21 et 3 (ou 9) de part et d'autre du fourreau) entre le couvercle 21 et le corps composite ou ladite poche. Transversalement à une direction 49 générale d'allongement des dépressions 47, et donc des creux 11 :
- le fourreau 41 occupe une section fermée S1 (voir section définie par le trait gras figures 15,16) comprise entre 30 et 100% de la section cumulée desdits couvercle 21 et corps composite ou poche (voir sections respectives hachurées S2a et S2b figures 15,16), et
- dans cette section fermée S1, les dépressions 47 occupent une section minoritaire, de préférence entre 5 et 20% de ladite section totale S1 du fourreau (voir hachures dans le fourreau figure 15). Le fourreau est en un matériau favorisant les échanges thermiques avec l'intérieur des éléments 3,9,21 pour que ceci s'opère au passage du fluide qui va donc circuler dans tout le fourreau (section S1).

Les dépressions 47 allongées peuvent être sur les deux grandes faces du fourreau si les panneaux ou structures 3 ou 9 et 21 sont tous deux pourvus de creux 11 (figure 15), ou sur une seule face si seule une des structures 3 ou 9 et 21 en est pourvue (figure 16).

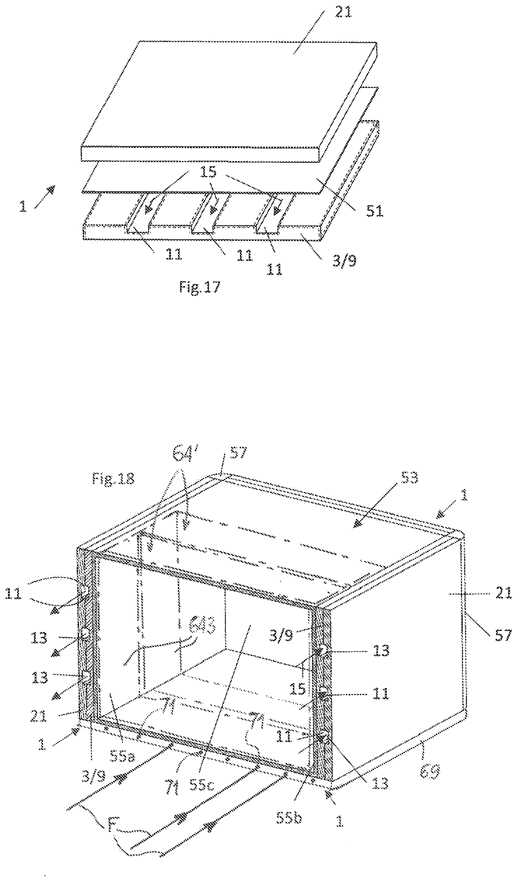

L'intérêt d'un fourreau par rapport à une solution à tubes indépendants ou à plaque 51, comme figures 14 ou 17, peut être une sécurité d'étanchéité ; on n'a plus non plus besoin que le couvercle 21 soit fixé avec le corps composite (3) ou la poche (9), de façon étanche au fluide. Dans la solution à fourreau, on peut miser sur une mise en place groupée, un auto-centrage et une section de passage du fluide 15 non limitée aux zones creuses (toute la section S1 est concernée, pas seulement celle des dépressions 47).

La solution alternative de la figure 17 propose que la structure 1 comprenne une plaque 51 de fermeture latérale des creux 11 et donc des parois 13 de canaux. La plaque 51, plane et pleine, est interposée de façon étanche au fluide entre ledit au moins un couvercle 21 et le corps composite 3 (ou ladite poche 9). Si tant le couvercle 21 que le corps composite 3 (ou ladite poche 9) présentaient des creux 11, la plaque 51 pourrait permettre de faire circuler deux fluides 15 différents, de part et d'autre de la plaque, dans les creux 11 respectifs. Si des tubes 39 de circulation d'un liquide, en tant que fluide 15. Les tubes 39 sont individuellement reçus dans les creux 11 qui se font face. Ils sont en un matériau favorisant les échanges thermiques avec l'intérieur des éléments 3,9,21 pour que ceci s'opère au passage du fluide.

La figure 18 permet quant à elle de schématiser une solution à boîtier 53 dont certaines au moins des parois latérales, trois adjacentes 55a,55b,55c dans l'exemple, sont doublées, ici extérieurement, par des panneaux latéraux 1 intégrant des (parois de) canaux 13 de circulation de fluide et des blocs 57 d'angles de liaison fluide entre deux canaux de panneaux adjacents. Les flèches latérales marquent les entrées et sorties du fluide 15, respectivement depuis et vers une source, à l'image de ce que montre la figure 1. Dans les exemples des figures 1 et 18, les blocs 57 d'angles sont disposés aux coins, entre deux panneaux latéraux, ou structures, 1 adjacents disposés pour former entre eux un angle et que les parois latérales 57a,57b de chaque bloc 57 d'angle permettent de réunir. Pour la circulation du fluide, chaque bloc 57 d'angle intègre des conduits 59 à connecter individuellement aux canaux 11 qui lui font face. Chaque conduit 59 est incurvé pour que le fluide passe l'angle correspondant. De préférence, chaque bloc 57 d'angle sera en matériau isolant thermique (mousse PU par exemple).

Sur la figure 18, on a aussi schématisé des cellules 64' contenues dans le boitier et une plaque de refroidissement 69 disposée en échange thermique avec les cellules 64' sur des dits deuxièmes côtés 643 de celles-ci, donc sur des côtés 643 autres que ceux en face desquels (autour desquels) se situent les structures 1 de gestion thermique. Les conduits ou canaux 71 traversent toujours la plaque de refroidissement 69, pour la circulation du fluide F concerné.

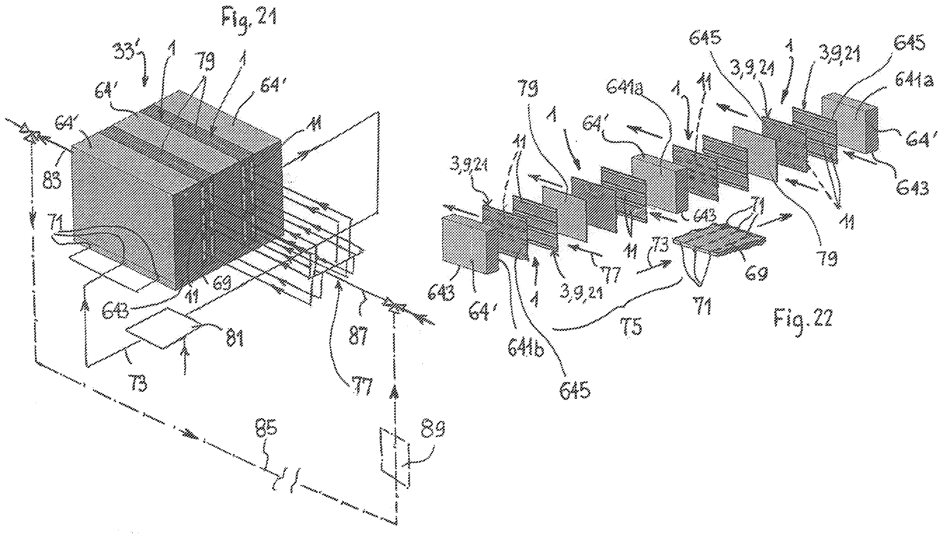

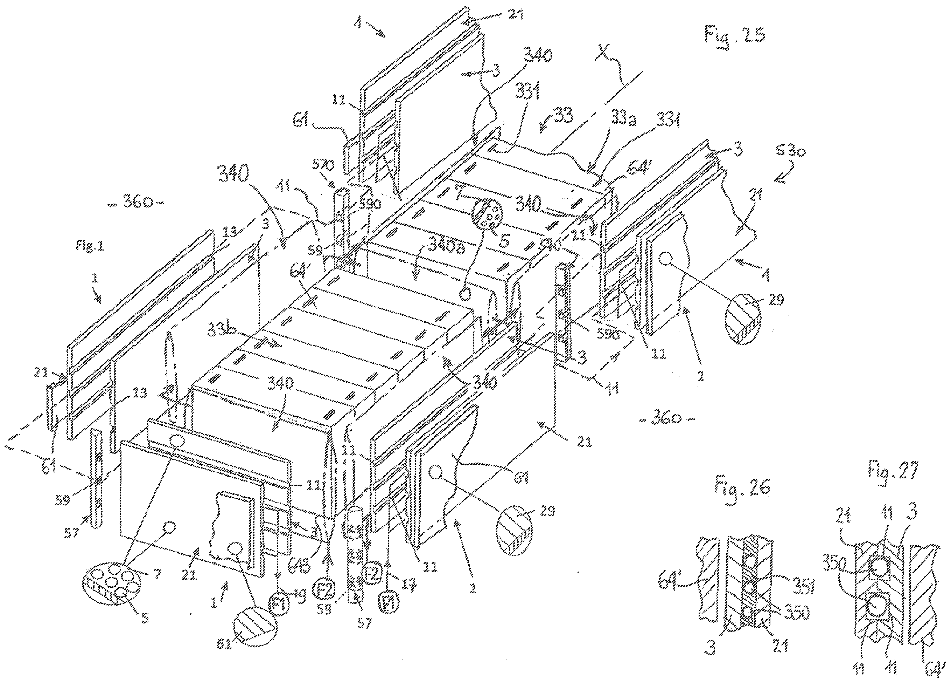

Les fluides F et 15 (ou F1 et F2 figure 25) peuvent être différents. La solution de la figure 21 le permet aussi.

Dans une application telle qu'une batterie 33, où la gestion thermique peut concerner tant une partie d'un tout (une cellule de la batterie) que le tout (l'ensemble des cellules de la batterie), l'élément 33,53 des solutions précitées présentées en liaison avec les figures 1 et 18 peut concerner tant une cellule que l'ensemble de ces cellules. Dans ce dernier cas, les panneaux latéraux, ou structures, 1 entoureraient l'ensemble des cellules, ce qui n'empêcherait pas que chaque cellule puisse être entourée par un autre groupe de panneaux latéraux, ou structures, 1 alimenté en fluide, lequel pourra être ou non le même que celui 15 précité.

A noter aussi que le couvercle 21 ou l'autre élément d'un panneau, ou structure, 1 à corps 3 ou poche 9 pourra comprendre un matériau isolant thermique 61 non sous vide interne partiel (mousse PU par exemple), donc non PIV (voir figure 1).

Par les figures 19,20 sont encore schématisées deux variantes d'une de structure 1 conforme à l'invention qui comprend une série de dits corps composite 3 et/ou poches 9 définissant chacun un plateau 63, dans deux versions 63a (figure 19), ou 63b (figure 20).

L'objectif est de réaliser un ensemble permettant de refroidir par exemple par air pulsé des cellules 64 de batterie de véhicule, en favorisant leur gestion thermique dans leur gamme de température optimale de fonctionnement, évitant les zones mortes et températures non homogènes.

A cette fin, chaque plateau 63 présente une épaisseur (e) et sur au moins une des faces 630, des canaux formés par les creux 11 précités. Ces canaux s'étendent tout le long de la face concernée et débouchent individuellement sur deux tranches opposés du plateau.

En outre, entre les canaux 11, des passages 65 sont formés dans l'épaisseur (e) du plateau 63 pour recevoir des éléments extérieurs 67 (en l'espèce les cellules 64) à placer en échange thermique avec le fluide F à faire circuler dans les canaux 11. Ainsi, les éléments extérieurs 64,67 à stocker le sont transversalement au plan P de chaque plateau et le flux de fluide F circule dans ce plan, sur la plus surface grande possible.

Chaque plateau pourra ainsi être défini par un élément de PCM moulé intégrant les passages 65 et les canaux 11, de là une facilité d'assemblage (vue de gauche figure 19), une intégration des canaux de fluide (vue du haut figure 19) et un choix aisé du changement de phase du PCM proche de la température de fonctionnement des cellules.

Typiquement, si les cellules 64 se présentent comme des sortes de « piles cylindriques » comme illustré, de forme chacune tubulaire, les plateaux seront favorablement empilés, parallèlement, et les uns en appui sur les autres entre les canaux 11 d'une même dite face, de sorte qu'un dit plateau 63 forme un couvercle pour le plateau adjacent 63, en créant ainsi desdits canaux à section fermée.

Pour augmenter les échanges thermiques, on conseille que les plateaux 63 comprennent des canaux 11 disposés dos à dos, sur les deux faces 630,631 opposées suivant l'épaisseur (e) de chaque plateau.

Et pour le positionnement et le maintien des cellules 64, les passages 65 traversent toute l'épaisseur (e) des plateaux 63 et les cellules 64 sont individuellement disposées dans les passages 65 successifs de ces plateaux 63 empilés qu'elles traversent. Une plaque support inférieure 69 soutient la pile et les cellules 64. Il peut s'agir d'une plaque de refroidissement creusée d'autres canaux 71 pour qu'y circule un liquide de refroidissement, en échange thermique avec chaque cellule 64, à sa base 64a ; vue de droite figure 19 et figure 20.

Dans la version de la figure 20, les canaux 11 sont tous parallèles les uns aux autres. Dans celle de la figure 19, les canaux 11 s'étendent suivant plusieurs directions (71a,71b) de façon à se croiser et sont disposés en quinconce, dans une des directions, celle 71b dans l'exemple (vue du haut figure 19).

En liaison avec une solution que l'on voit schématisée figures 19 à 22, un autre aspect de l'invention vise à assurer une gestion thermique particulièrement fine et efficace d'une batterie électrique de véhicule, telle celle 33 de la figure 1, ou celle de la figure 19 avec ses cellules cylindriques, ou encore celle 33' des figures 21,22 avec ses cellules prismatiques, ici rectangulaires, 64', alignées suivant au moins une direction pour former un parallélépipède rectangle de section carrée ou rectangulaire.

Si WO2017153691 évoque le sujet, la solution pouvait être améliorer.

Aussi est-il ici en premier lieu proposé en solution perfectionnée, comme figures 21, 22, un assemblage comprenant :
- plusieurs structures 1 comme déjà présentées, avec toute ou partie de leurs caractéristiques, et donc individuellement à corps composite 3 ou poche 9 ou couvercle 21,
- plusieurs cellules 64' de batterie électrique de véhicule et
- une dite plaque de refroidissement 69 disposée en échange thermique avec les cellules 64' sur des dits deuxièmes côtés 643 de celles-ci.

La plaque de refroidissement 69 est thermiquement relativement conductrice (par exemple métallique, tel que de l'aluminium) et présente des conduits (ici internes) 71 qui sont reliés à une dite deuxième alimentation 73 en un fluide à faire circuler dans lesdits conduits 71, pour un échange thermique de surface avec les cellules 64'. A ce sujet, on note que ceci est aussi prévu dans la solution des figures 19,20. On appelle « échange thermique de surface » cet échange thermique car la plaque de refroidissement 69 est contre une face de limite extérieure de la batterie. Elle n'est pas entre deux cellules comme le sont les structures 1. Dans le mode de réalisation retenu, chaque cellule et la batterie dans son ensemble reposent sur la plaque de refroidissement 69.

Par ailleurs, dans cette solution, entre deux premiers côtés opposés (respectivement 641a et 641b figure 22) d'au moins deux cellules 64' successives existe un espace 75 où est interposée, en échange thermique avec les cellules, au moins une dite structure (1 ;3,9,21), avec ses creux 11 formant canaux qui sont reliés à une dite première alimentation 77 en un fluide à faire circuler dans lesdits canaux 11, au cœur de l'espace 75, entre les cellules 64'. Les premier et deuxième fluides, respectivement des alimentations 77,73, ne se croisent pas ; leurs circulations sont indépendantes ; de là la possibilité de deux fluides différents.

Si figure 22 on voit bien l'espace 75, du fait de la vue éclatée, chaque espace est, une fois l'assemblage réalisé, occupé par au moins une structure 1. Les structures (1 ;3,9,21) et cellules 64' sont plaquées les unes contre les autres, dans une direction d'empilement (ici horizontale). Dans le mode de réalisation retenu, chaque espace 75 est occupé, d'une cellule à la suivante, par deux structures 1, un bloc isolant thermique 79, puis encore deux structures 1.

La deuxième alimentation 73 en fluide sera utilement celle d'un liquide, tel de l'eau, car l'étanchéité et les branchements sont plus simples à assurer que pour la première alimentation 77. En outre, ceci sera plus efficace dès lors que l'on est sur un « échange thermique de surface ». Cette deuxième alimentation 73 en fluide sera par ailleurs utilement branchée en circuit fermé, via une pompe 81 ; figure 21.

Après être sortie (en 83 figure 21) dudit assemblage, les conduits réunis de ladite première alimentation 77 pourront, via un conduit 85 et des vannes adaptées, être bouclés sur l'entrée 87, pour assurer un recyclage du fluide, quitte à le faire passer dans un échangeur thermique 89, notamment pour souffler à certains moments dans les canaux 11 un fluide suffisamment froid pour faire revenir à l'état solide les MCP, dans une hypothèse de MCPs à deux phases : solide et liquide.

La deuxième alimentation 73 en fluide utilisera utilement un fluide gazeux, tel de l'air. On préfèrera que la circulation de ce fluide dans l'assemblage soit forcée (ventilateur ou autre).

De nouveau pour une qualité d'échange thermique et une optimisation réfléchie de la gestion thermique assurée par lesdites circulations de fluides, en liaison avec les MCPs présents, il est conseillé que chaque corps composite (3) ou poche (9) présente, en face des cellules 64' (mais ceci peut aussi s'appliquer par exemple sur les cellules 64 de la précédente solution), une surface pleine, continue, 645 pour des échanges thermiques non-discrets avec les cellules. On aura compris qu'à l'inverse un contact discret est comme des zones séparées, sans continuum.

Ainsi, dans la précédente solution, les surfaces 645 étaient formées par des faces cylindriques pleines. Dans la solution des figures 21,22, les surfaces 645 sont planes, comme le sont en face les parois 641a et 641b des cellules. Ainsi, on peut prévoir qu'en face d'une dite cellule (64 ou 64' par exemple) chaque corps composite (3) ou poche (9) soit plaquée en contact surfacique contre la cellule, sans circulation ventilée (forcée) de fluide entre eux.

Croiser les flux des premier et deuxième fluides (toujours sans les mélanger) pourrait améliorer encore l'efficacité des échanges thermiques.

Par ailleurs, pour contrer les transferts thermiques d'une dite cellule 64', il est proposé dans la solution pour cellules prismatiques (figures 21,22), d'interposer un bloc isolant thermique 79 entre deux corps composites (3) ou poches (9) eux-mêmes donc interposés entre deux dites cellules 64'.

Dans la solution de la figure 23, qui reprend les caractéristiques de la solution précédente (figures 21,22), on a adjoint des feuilles d'isolation électrique 91, chacune interposée entre une structure 1 et une cellule 64'.

Les feuilles d'isolation électrique 91 ont pour objectif, dans le cas où le PCM des corps composites (3) ou poches (9) serait conducteur électrique, d'éviter les courts circuits. Il n'est pas obligatoire de mettre en place ce composant, tout dépend des caractéristiques du matériau PCM mais également de l'effet voulu : isolation électrique souhaitée ou non.

Si les feuilles d'isolation électrique 91 sont prévues, on aura, pour l'efficacité de l'isolation électrique, avantage à ce que les surfaces de contact entre les éléments 1,91,64' soient plans et continus ; de là le conseil de surfaces planes sur les deux faces opposées des feuilles d'isolation électrique 91 et sur la face de la structure 1 (corps composite 3 ou poche 9) orientée vers la feuille d'isolation électrique 91 qui lui est adjacente ; voir figure 23.

Sur la figure 24, des « plaques de refroidissement » 69 bordent sur deux côtés opposés un groupe de cellules 64' considérées dans leur ensemble. Chaque plaque de refroidissement 69 se présente comme un groupe des tubes, ou tuyaux, 690, parallèles entre eux et où circule un fluide F adapté pour être en échange thermique avec les cellules 64' à travers la matière des tubes 690 qui peut être un caoutchouc synthétique ou un métal (aluminium par exemple car thermiquement conducteur).

Ainsi, comme précédemment :
- les cellules 64' pourront être gérées thermiquement via le fluide F circulant le long d'elles, ici dans les tubes 690, et
- à travers la matière de chaque plaque de refroidissement, les cellules 64' et le fluide F sont en contact thermique.

Comme dans les autres exemples, le groupe de cellules 64' considéré dans son ensemble va donc pouvoir être chauffé ou refroidi, en fonction de la température du fluide en circulation et du gradient thermique ainsi créé entre les cellules 64' et le fluide F.

On aura compris que les tubes 690 correspondent aux conduits ou canaux 71 précités.

Les tubes 690 peuvent, par côté ou par groupe, être parallèles entre eux.

Ils peuvent aussi n'être disposés qu'en regard d'une seule et même face d'un groupe de cellules 64' considéré dans son ensemble, comme l'est la plaque de refroidissement 69 dans l'exemple de la figure 18.

Sur la figure 25, on a illustré une autre variante de réalisation de la solution de la figure 1 qui en reprend toutes les caractéristiques, avec les compléments suivants, étant précisé que, si la vue de la figure 25 est partielle, elle peut être complétée par symétrie ; la partie manquante complète à l'identique celle visible.

Dans cette solution, la batterie 33 comprend plusieurs ensembles ou groupes (ici deux 33a,33b) de cellules. Les groupes 33a,33b de cellules 64' sont alignées suivant une direction X. Les cellules 64' présentent chacune des bornes 331 de connexion électrique (anode/cathode).

Comme dans le cas de la figure 1, sur plusieurs côtés, et de préférence sur tout un périmètre, entourant les groupes 33a,33b de cellules s'étend le boîtier 530, avec donc ses structures 1 chacune à corps composite contenant au moins un matériau 5 à changement de phase (MCP) dans une matrice 7 rigide structurante.

Ainsi, autour d'un groupe de cellules considérées toutes ensemble, les structures 1 à MCP s'étendront favorablement sur au moins deux côtés latéraux opposés (comme sur les côtés montrés en coupe figure 18),
- en assurant un compromis pertinent entre encombrement et efficacité en termes de barrière thermique, par couplage avec un dit isolant thermique 61 (ou 29),
- et en permettant que les autres côtés puissent être réservés en particulier (au moins) l'un pour l"échange thermique avec les cellules (sans matériau MCP), et un autre pour les bornes de raccordement des cellules 1.

Aux coins, si nécessaire, des blocs d'angles 57 traversés par des passages de communication 59 peuvent toutefois être interposés chacun entre deux structures 1 successives, pour les réunir. Le fluide F précité y circule.

Si nécessaire, le long des côtés concernés du boîtier, des blocs 570, traversés par des passages de communication 590, peuvent être interposés chacun entre deux structures 1 successives, pour les réunir. Le fluide F précité y circulera. Les blocs 570 peuvent être identiques aux blocs d'angles 57 à l'orientation des passages de communication près : orientation axiale pour ceux 590, orientation coudée pour ceux 59.

Autre spécificité, cette solution comprend :
- outre cette barrière thermique formée par le boîtier 530 :
   -- qui borde donc sur plusieurs côtés un volume intérieur dans lequel les cellules 64' de la batterie sont disposées, et
   -- dont les structures 1 retardent ou favorisent une propagation d'un flux thermique hors ou vers le volume,
- un ou plusieurs éléments d'échange thermique 69, 340 en métal ou en polymère et travers lequel(lesquels) circule un fluide d'échange thermique adapté à échanger thermiquement avec les cellules, comme déjà expliqué pour l'élément 69 appelé ci-avant plaque de refroidissement. Comme précédemment, le fluide d'échange thermique pourra être caloporteur ou frigorigène.

Ainsi, même si la figure 25 ne l'illustre pas, les éléments d'échange thermique 340 pourraient être remplacés (voire hypothétiquement complétés) par la plaque de refroidissement 69 disposée en regard d'une face autre que celle des bornes 331 et des parois 1 du boîtier, et donc (disposée) possiblement sous les cellules, comme schématisé figures 21-23).

Dans une solution à structures 1 de gestion thermique (comprenant chacun un corps composite) et éléments d'échange thermique 340 (avec ou sans plaque de refroidissement 69), les éléments d'échange thermique 340 ne contiennent pas de MCP : ce ne sont pas des éléments de barrière thermique mais des échangeurs thermiques disposés en échange thermique « primaire » avec les cellules : directement à leur contact ou du moins en contact thermique avec elles et interposés entre elles et les structures 1 périphériques de gestion thermique, sauf pour ceux des éléments d'échange thermique 340a (figure 25) qui peuvent être interposés entre deux groupes successifs 33a,33b de cellules et qui peuvent contenir un isolant thermique et/ou un corps composite précité MCP 5/matrice 7, pour rompre une chaîne thermique en cas de surchauffe d'un dit groupe.

Comme illustré figures 1,25, autour des structures 1 périphériques, on trouvera utilement un isolant thermique 61 ou 29 (PIV), complétant ainsi la barrière thermique qui opposera d'abord à l'environnement extérieur 360 au moins une couche d'isolant thermique, avant que n'entre(nt) en jeu le(s) MCP des structures 1.

Concernant ledit fluide F d'échange thermique, on peut avoir plusieurs fluides F1, F2 ne se mélangeant pas :
- un premier fluide F1 correspondant au fluide F précité, pour les canaux 11 (voir pointillés de liaison entre structures 1 figure 25), et
- un deuxième fluide F2 (de préférence a priori liquide) prévu pour circuler dans les éléments d'échange thermique 340 ou dans la plaque de refroidissement 69.

On peut alors imaginer transposer la solution à deux circuits illustrée figure 21, avec :
- le circuit du fluide 73, conservé s'il y a une plaque de refroidissement 69, ou bien où le fluide serait F2 et la plaque de refroidissement 69 serait remplacée par les éléments d'échange thermique 340 (comme figure 25 où les traits gras fléchés entre éléments 340 ou entre éléments 340/340a schématisent le passage du fluide F2 entre ces éléments), et
- le circuit 77, où (comme figure 25) le fluide serait F1 qui circulerait dans des canaux 11, non pas à cœur entre deux cellules 64' (comme figure 21), mais en périphérie des groupes de cellules considérés ensemble, dans les structures 1 de gestion thermique.

Bien que la solution à creux 11 intégrés définissant par eux-mêmes les parois 13 de canaux est très pertinente (gain de masse, process de fabrication simple, épaisseur réduite), les structures 1 et/ou les éléments d'échange thermique 340/340a et/ou la plaque de refroidissement 69 pourrai(en)t, en particulier dans les situations d'échange thermique avec des cellules 64' (comme dans les solutions présentées en liaison avec les figures 1 et 25), être réalisées :
- sans intégrer de creux 11, avec individuellement un corps composite 3 comme précité, de préférence complété par un couvercle 21 avec, interposés entre eux, des conduits 350 maintenus par un matériau de remplissage de préférence thermiquement conducteur 351 (cf. figure 25), ou
- avec des creux 11 intégrés, et donc encore individuellement un corps composite 3 comme précité, de préférence complété par un couvercle 21 et interposés entre eux des conduits 350 placés dans les creux 11 qui les maintiendraient (cf. figure 26).

Le fluide concerné (F ou F1 précité) pourrait circuler dans ces conduits 350.

## Revendications

1. Ensemble comprenant :
- une batterie (33,33') de véhicule comprenant des cellules (64,64'),
- un boîtier entourant la batterie, et
- plusieurs structures (1) de gestion thermique de la batterie, comprenant individuellement au moins un matériau (5) à changement de phase (MCP) entourant au moins un conduit (13,39,47,350) pouvant convenir à la circulation d'un fluide, lesdits conduits étant raccordés à une entrée (17) et une sortie (19) de fluide (15,F,F1,F2),
**caractérisé en ce que** :
- lesdites structures (1) définissent ou doublent des parois latérales du boîtier, sur des premiers côtés des cellules (64'), et
- l'ensemble comprend en outre :
-- une plaque de refroidissement (69) à travers laquelle peut circuler un fluide d'échange thermique adapté à échanger thermiquement avec les cellules (64'), la plaque de refroidissement (69) étant disposée, pour un échange thermique avec les cellules (64'), sur des deuxièmes côtés (643) de celles-ci différents desdits premiers côtés, et/ou
-- un ou plusieurs éléments d'échange thermique (340) à travers le(s)quell(s) peut circuler un fluide d'échange thermique adapté à échanger thermiquement avec les cellules, le(s) élément(s) d'échange thermique (340) étant interposé(s) entre lesdits premiers côtés des cellules (64') et lesdites structures (1).

2. Ensemble selon la revendication 1, dans lequel le matériau (5) à changement de phase (MCP) est dans une matrice (7) rigide structurante, de sorte qu'est formé un corps composite autoportant quelle que soit la phase du matériau à changement de phase contenu, le corps composite étant conformé pour localement présenter extérieurement au moins un creux (11) qui définit par lui-même une paroi (13) de canal correspondant audit au moins un conduit (13,39,47,350) pouvant convenir à la circulation d'un fluide.

3. Ensemble selon la revendication 1 ou 2, qui comprend des blocs (57,59) interposés chacun entre deux dites structures successives (1), qui les réunissent et qui sont traversés, pour la circulation du fluide, par des passages (59) de communication entre lesdits conduits des structures (1) successives.

4. Ensemble selon la revendication 3, dans lequel les blocs sont des blocs (59) d'angles disposés aux coins du boîtier.

5. Ensemble selon la revendication 2 seule, ou la revendication 2 et l'une des revendications 3 ou 4, dans lequel les structures (1) comprennent individuellement un couvercle (21) comprenant :
- un autre corps composite (30) contenant au moins un matériau (5) à changement de phase (MCP) dans une matrice (7) rigide structurante, de sorte que ledit autre corps composite est autoportant quelle que soit la phase du matériau à changement de phase contenu, et/ou
- une poche (90) plastique ou métallique, étanche au gaz et sous vide interne partiel, ayant une forme maintenue par le vide interne, le couvercle (21) étant fixé avec le corps composite (3) de façon étanche vis-à-vis de la circulation du fluide.

6. Ensemble selon la revendication 5, dans lequel le couvercle (21) est conformé pour localement présenter au moins un creux allongé (11):
- qui définit par lui-même une autre paroi (13) de canal convenant à la circulation du fluide, et
- qui complète et ferme latéralement ladite paroi de canal du corps composite (3), à une interface de contact.

7. Ensemble selon la revendication 2 seule, ou la revendication 2 et l'une des revendications 3 à 6, dans lequel la matrice (7) rigide structurante comprend un élastomère ou des fibres.

8. Ensemble selon l'une quelconque des revendications précédentes, dans lequel la matrice (7) rigide structurante comprend un feutre de graphite.

9. Ensemble selon la revendication 5 seule ou la revendication 5 et l'une quelconque des revendications 6 à 8, qui comprend en outre un fourreau (41) de circulation dudit fluide qui :
-- est raccordé auxdites entrée (17) et sortie (19) de fluide,
-- intègre plusieurs dépressions (47) allongées calées dans plusieurs dits creux (11),
-- est fixé entre ledit au moins un couvercle (21) et le corps composite (3),
-- transversalement à une direction générale d'allongement des dépressions (47), occupe une section fermée comprise entre 30 et 100% de la section cumulée desdits:
--- au moins un couvercle (21) et
--- corps composite (3), et,
-- transversalement à leur direction générale d'allongement, les dépressions (47) occupent une section minoritaire, de préférence entre 5 et 20% de la section totale du fourreau (41).

10. Ensemble selon l'une quelconque des revendications précédentes dans lequel, entre au moins deux cellules (64') successives existe un espace (75) où est interposée, en échange thermique avec les cellules, au moins une dite structure (1,340a) disposée au cœur de l'espace (75) entre les cellules.

11. Ensemble selon la revendication 2 seule, ou la revendication 2 et l'une des revendications 3 à 10, dans lequel chaque corps composite (3) présente, en face des cellules (64,64'), une surface (645) pleine, continue, pour un échange thermique non-discret avec elles.

12. Ensemble selon la revendication 11 dans lequel, en face d'une dite cellule (64,64'), chaque corps composite (3) est en contact contre la cellule, sans circulation ventilée de fluide entre eux.

13. Ensemble selon l'une quelconque des revendications précédentes, dans lequel le boîtier définit une barrière thermique:
- qui borde sur plusieurs côtés un volume intérieur dans lequel lesdites cellules (64') de la batterie sont disposées, et
- dont lesdites structures (1) qui en définissent ou en doublent les parois latérales retardent ou favorisent une propagation d'un flux thermique hors ou vers le volume.

14. Ensemble selon l'une quelconque des revendications précédentes qui comprend en outre des parois d'isolant thermique (29,61) doublant extérieurement lesdites structures (1).

## Patentansprüche

1. Anordnung, enthaltend:
- eine Fahrzeugbatterie (33, 33') mit Zellen (64, 64'),
- ein die Batterie umgebendes Gehäuse, und
- mehrere Strukturen (1) für das Wärmemanagement der Batterie, die einzeln zumindest ein Phasenwechselmaterial (5) enthalten, das zumindest eine Leitung (13, 39, 47, 350) umgibt, die für die Strömung eines Fluids geeignet sein kann, wobei die Leitungen mit einem Einlass (17) und einem Auslass (19) für das Fluid (15, F, F1 ,F2) verbunden sind,
**dadurch gekennzeichnet, dass**
- die Strukturen (1) Seitenwände des Gehäuses auf ersten Seiten der Zellen (64') definieren oder umkleiden, und
- die Anordnung ferner enthält:
-- eine Kühlplatte (69), durch die ein Wärmeaustauschfluid strömen kann, das für den Wärmeaustausch mit den Zellen (64') geeignet ist, wobei die Kühlplatte (69) für den Wärmeaustausch mit den Zellen (64') auf zweiten Seiten (643) derselben angeordnet ist, die sich von den ersten Seiten unterscheiden, und/oder
-- ein oder mehrere Wärmetauscherelemente (340), durch das bzw. die ein Wärmeaustauschfluid strömen kann, das für den Wärmeaustausch mit den Zellen geeignet ist, wobei das/die Wärmetauscherelement(e) (340) zwischen den ersten Seiten der Zellen (64') und den Strukturen (1) angeordnet ist/sind.

2. Anordnung nach Anspruch 1,
wobei sich das Phasenwechselmaterial (5) in einer strukturierenden starren Matrix (7) befindet, so dass ein unabhängig von der Phase des enthaltenen Phasenwechselmaterials selbsttragender Verbundkörper entsteht, wobei der Verbundkörper so geformt ist, dass er bereichsweise außen zumindest einen Hohlraum (11) aufweist, der seinerseits die Wandung (13) eines Kanals definiert, welcher der zumindest einen Leitung (13, 39, 47, 350) entspricht, die sich für die Strömung eines Fluids eignen kann.

3. Anordnung nach Anspruch 1 oder 2,
enthaltend Blöcke (57, 59), die jeweils zwischen zwei der genannten aufeinanderfolgenden Strukturen (1) eingefügt sind, diese verbinden und für die Strömung des Fluids von Durchgängen (59) zur Verbindung zwischen den Leitungen der aufeinanderfolgenden Strukturen (1) durchsetzt sind.

4. Anordnung nach Anspruch 3,
wobei die Blöcke Eckblöcke (59) sind, die an den Ecken des Gehäuses angeordnet sind.

5. Anordnung nach Anspruch 2 allein oder nach Anspruch 2 und einem der Ansprüche 3 oder 4,
wobei die Strukturen (1) einzeln eine Abdeckung (21) aufweisen, enthaltend:
- einen weiteren Verbundkörper (30), der zumindest ein Phasenwechselmaterial (5) in einer strukturierenden starren Matrix (7) enthält, so dass der weitere Verbundkörper unabhängig von der Phase des enthaltenen Phasenwechselmaterials selbsttragend ist, und/oder
- einen gasdichten Kunststoff- oder Metallbeutel (90) unter partiellem Innenvakuum, der eine durch das Innenvakuum aufrechterhaltene Form aufweist, wobei die Abdeckung (21) mit dem Verbundkörper (3) in einer gegenüber der Fluidströmung dichten Weise befestigt ist.

6. Anordnung nach Anspruch 5,
wobei die Abdeckung (21) so geformt ist, dass sie bereichsweise zumindest einen länglichen Hohlraum (11) aufweist,
- der seinerseits eine weitere Wandung (13) eines Kanals definiert, der für die Strömung des Fluids geeignet ist, und
- der die Kanalwandung des Verbundkörpers (3) an einer Kontaktschnittstelle ergänzt und seitlich verschließt.

7. Anordnung nach Anspruch 2 allein oder nach Anspruch 2 und einem der Ansprüche 3 bis 6,
wobei die strukturierende starre Matrix (7) ein Elastomer oder Fasern enthält.

8. Anordnung nach einem der vorhergehenden Ansprüche,
wobei die strukturierende starre Matrix (7) einen Filz aus Graphit enthält.

9. Anordnung nach Anspruch 5 allein oder nach Anspruch 5 und einem der Ansprüche 6 bis 8,
ferner enthaltend eine Hülse (41) zur Strömung des Fluids, die
-- mit dem Fluideinlass (17) und -auslass (19) verbunden ist,
-- mehrere längliche Vertiefungen (47) integriert, die in mehreren Hohlräumen (11) festgelegt sind,
-- zwischen der zumindest einen Abdeckung (21) und dem Verbundkörper (3) befestigt ist,
-- quer zu einer Erstreckungsrichtung der Vertiefungen (47) einen geschlossenen Querschnitt zwischen 30 und 100 % des kumulierten Querschnitts aus
--- zumindest einer Abdeckung (21) und
--- dem Verbundkörper (3),
einnimmt, und
-- wobei quer zu ihrer Erstreckungsrichtung die Vertiefungen (47) einen kleineren Querschnitt einnehmen, vorzugsweise zwischen 5 und 20 % des Gesamtquerschnitts der Hülse (41).

10. Anordnung nach einem der vorhergehenden Ansprüche,
wobei zwischen zumindest zwei aufeinanderfolgenden Zellen (64') ein Raum (75) besteht, in dem zumindest eine im Kern des Raums (75) zwischen den Zellen angeordnete Struktur (1, 340a) in Wärmeaustausch mit den Zellen eingefügt ist.

11. Anordnung nach Anspruch 2 allein oder nach Anspruch 2 und einem der Ansprüche 3 bis 10,
wobei jeder Verbundkörper (3) den Zellen (64, 64') gegenüberliegend eine durchgehende, massive Oberfläche (645) für einen nicht-diskreten Wärmeaustausch mit den Zellen aufweist.

12. Anordnung nach Anspruch 11,
wobei die Verbundkörper (3) einer Zelle (64, 64') gegenüberliegend jeweils in Kontakt mit der Zelle stehen, und zwar ohne belüftete Fluidströmung zwischen diesen.

13. Anordnung nach einem der vorhergehenden Ansprüche,
wobei das Gehäuse eine Wärmebarriere definiert,
- die auf mehreren Seiten ein Innenvolumen begrenzt, in dem die Zellen (64') der Batterie angeordnet sind,
- wobei die Strukturen (1), die deren Seitenwände definieren oder umkleiden, eine Ausbreitung eines Wärmeflusses aus dem oder in das Volumen verzögern oder begünstigen.

14. Anordnung nach einem der vorhergehenden Ansprüche,
ferner enthaltend Wärmedämmwände (29, 61), die die Strukturen (1) außen umkleiden.

## Claims

1. An assembly comprising :
- a vehicle battery (33,33') including cells (64,64'),
- a housing surrounding the battery, and
- several structures (1) for thermally managing the battery, individually comprising at least one phase change material (5) surrounding at least one conduit (13, 39, 47, 350) suitable for circulating a fluid, said conduits being connected to a fluid inlet (17) and a fluid outlet (19) for the fluid (15, F, F1, F2),
**characterized in that** :
- said structures (1) define or line side walls of the housing, on first sides of the cells (64'), and
- the assembly further comprises :
-- a cooling plate (69) through which a thermal exchange fluid adapted to be in a thermal exchange with the cells (64') can circulate, the cooling plate (69) being disposed, for thermal exchange with the cells (64'), on second sides (643) of the cells different from said first sides, and/or
-- one or more thermal exchange element(s) (340) through which a thermal exchange fluid adapted to thermal exchange with the cells can circulate, the thermal exchange element(s) (340) being interposed between said first sides of the cells (64') and said structures (1).

2. The assembly according to claim 1, in which the phase change material (5) is in a rigid structuring matrix (7), so that a composite body is formed which is self-supporting whatever the phase of the phase change material contained, the composite body being shaped so as locally to present externally at least one depression (11) which defines by itself a channel wall (13) corresponding to said at least one conduit (13, 39, 47, 350) suitable for circulating a fluid.

3. The assembly according to claim 1 or 2, which comprises blocks (57, 59) each interposed between two of said structures (1) successively disposed, which join them and which are traversed, for circulating the fluid, by passages (59) for communication between said conduits of the successive structures (1).

4. The assembly according to claim 3, wherein the blocks are corner blocks (59) arranged at corners of the housing.

5. The assembly according to claim 2 alone, or claim 2 and one of claims 3 or 4, in which the structures (1) individually comprise a cover (21) comprising:
- an additional composite body (30) containing at least one phase change material (5) in a rigid structuring matrix (7), such that said additional composite body is self-supporting regardless of the phase of the phase change material contained, and/or
- a plastic or metal bag (90) which is gas-tight and under partial internal vacuum, having a shape maintained by the internal vacuum, the cover (21) being fixed with the composite body (3) in a fluid-tight manner.

6. The assembly according to claim 5, wherein the cover (21) is shaped to locally have at least one elongated depression (11):
- which in itself defines an additional channel wall (13) suitable for fluid flow, and
- which completes and laterally closes said channel wall of the composite body (3) at a contact interface.

7. The assembly according to claim 2 alone, or claim 2 and one of claims 3 to 6, wherein the rigid structuring matrix (7) comprises an elastomer or fibers.

8. The assembly according to any one of the preceding claims, wherein the rigid structuring matrix (7) comprises a graphite felt.

9. The assembly according to claim 5 alone or claim 5 and any of claims 6 to 8, which further comprises a sheath (41) for circulating said fluid, which :
- is connected to said fluid inlet (17) and fluid outlet (19),
- integrates several elongated recesses (47) wedged in several said depressions (11),
- is fixed between the at least one cover (21) and the composite body (3),
- transverse to a general direction of elongation of the recesses (47), occupies a closed section between 30% and 100% of the cumulative section of said:
-- at least one cover (21) and
-- composite body (3), and,
- transverse to the general direction of elongation, the recesses (47) occupy a minor section, preferably between 5% and 20% of the total section of the sheath (41).

10. The assembly according to any one of the preceding claims in which, between at least two successive cells (64') there is a space (75) in which is interposed, in thermal exchange with the cells, at least one said structure (1,340a) thus disposed whithin said space (75) between the cells.

11. The assembly according to Claim 2 alone, or Claim 2 and one of Claims 3 to 10, wherein each composite body (3) has, opposite the cells (64, 64'), a continuous, full surface (645) for non-discrete thermal exchange with them.

12. The assembly according to claim 11 in which, opposite one said cell (64,64'), each composite body (3) is in contact against the cell, without ventilated fluid circulation between them.

13. The assembly according to any one of the preceding claims, in which the housing defines a thermal barrier:
- which borders on several sides an interior volume in which said cells (64') of the battery are disposed, and
- whose said structures (1) which define or line its side walls delay or promote a propagation of a thermal flow out of or towards the volume.

14. The assembly according to any of the foregoing claims which further comprises thermal insulating walls (29, 61) externally lining said structures (1).
